(19) Europäisches Patentamt
European Patent Office
Office européen des brevets

(11) **EP 0 556 887 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(51) Int Cl.6: **G01N 23/201**, G01N 23/20, G01T 1/29

(21) Anmeldenummer: **93200254.6**

(22) Anmeldetag: **02.02.1993**

(54) **Anordnung zum Messen des Impulsübertragsspektrums von elastisch gestreuten Röntgenquanten**

Device for the measurement of the pulse transfer spectrum of X-ray quantor

Dispositif pour la mesure du spectre de transfert d'impulsions de quantor de rayonnement X

(84) Benannte Vertragsstaaten:
**DE FR GB**

(30) Priorität: **06.02.1992 DE 4203354**
**07.07.1992 DE 4222227**

(43) Veröffentlichungstag der Anmeldung:
**25.08.1993 Patentblatt 1993/34**

(73) Patentinhaber:
- **Philips Patentverwaltung GmbH**
  **22335 Hamburg (DE)**
  Benannte Vertragsstaaten:
  **DE**
- **Philips Electronics N.V.**
  **5621 BA Eindhoven (NL)**
  Benannte Vertragsstaaten:
  **FR GB**

(72) Erfinder: **Harding, Geoffrey, Dr.**
**W-2000 Hamburg 1 (DE)**

(74) Vertreter: **Hartmann, Heinrich, Dipl.-Ing. et al**
**Philips Patentverwaltung GmbH,**
**Röntgenstrasse 24**
**22335 Hamburg (DE)**

(56) Entgegenhaltungen:
**EP-A- 0 273 670**        **EP-A- 0 360 347**
**EP-A- 0 462 658**        **DE-A- 2 312 507**
**DE-C- 2 003 753**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Anordnung zum Messen des Impulsübertragsspektrums von elastisch gestreuten Röntgenquanten mit

- einem polychromatischen Röntgenstrahler,
- einer zwischen dem Röntgenstrahler und dem Untersuchungsbereich angeordneten Primärblendenanordnung zum Ausblenden eines den Untersuchungsbereich auf der Mantelfläche eines Kegels durchsetzenden Primärstrahlenbündels
- einer aus mehreren Detektorelementen bestehenden Detektoranordnung zum Erfassen von im Untersuchungsbereich gestreuten Röntgenquanten und
- einer zwischen dem Untersuchungsbereich und der Detektoranordnung angeordneten Sekundärblendenanordnung, die mit Abbildungsschlitzen versehen ist, die eine durch den Röntgenstrahler verlaufende Systemachse kreisbogenförmig umschließen.

Eine solche, aus der EP-OS 462 658 bekannte Anordnung kann beispielsweise in einem Gepäckstück Stoffe, insbesondere kristalline Stoffe (Sprengstoffe), anhand ihres Impulsübertragsspektrums identifizieren. Die Sekundärblendenanordnung hat dabei die Form einer Platte, die mit einem ringförmigen Schlitz versehen ist. Durch diesen Schlitz hindurch wird der Untersuchungsbereich auf die Detektoranordnung abgebildet, weshalb ein solcher Schlitz im folgenden auch als Abbildungsschlitz bezeichnet wird. Durch den Abbildungsschlitz hindurch können die ebenfalls ringförmigen Detektorelemente die Streustrahlung erfassen, die von dem Primärstrahlenbündel innerhalb des Untersuchungsbereichs erzeugt wird. Die Streustrahlung aus dem Abschnitt des Untersuchungsbereichs, der der Systemachse am nächsten ist, wird von dem Detektorelement erfaßt, das den größten Abstand von der Systemachse hat, während die Streustrahlung von dem Abschnitt, der am weitesten von der Systemachse entfernt ist, von dem Detektorelement mit dem geringsten Abstand von der Systemachse erfaßt wird. Obwohl also jedes Detektorelement die Streustrahlung erfaßt, die unter einem definierten Streuwinkel aus dem Primärstrahlenbündel austritt, weichen die den verschiedenen Detektorelementen zugeordneten Streuwinkel voneinander ab.

Da der Impulsübertrag dem Produkt aus dem Sinus des halben Streuwinkels und der Energie des elastisch gestreuten Röntgenquants proportional ist, hat dies zur Folge, daß das Verhältnis zwischen maximaler und minimaler Energie der vom Röntgenstrahler emittierten Röntgenquanten wesentlich größer sein muß als das Verhältnis zwischen dem maximalen und dem minimalen Impulsübertrag, der von jedem der Detektorelemente gemessen werden soll. Verhält sich der maximale Impulsübertrag zum minimalen Impulsübertrag z.B. wie 1,8 : 0,8 (d.h. 2,25 : 1), dann erfordert dies ein größeres Verhältnis von höchster und niedrigster Energie der für die Bestimmung des Impulsübertrags herangezogenen Röntgenquanten. Je nach dem Streuwinkelunterschied kann dieses Verhältnis z.B. 4 : 1 betragen. Daraus können sich Schwierigkeiten ergeben, weil Röntgenquanten mit geringer Energie im Untersuchungsbereich stark absorbiert werden, während Röntgenquanten mit höherer Energie in den üblichen Halbleiterdetektoren (Ge,Li) nicht ausreichend absorbiert werden, so daß die Empfindlichkeit dieser Detektoren für Quanten höherer Energie abnimmt.

In dieser Hinsicht liegen die Verhältnisse bei den Anordnungen nach der US-PS 5 007 072 sowie nach der EP-OS 360 347 zwar günstiger, weil dabei alle Detektorelemente nur die unter jeweils demselben Streuwinkel gestreuten Röntgenquanten erfassen. Deshalb muß dabei das Verhältnis zwischen maximaler und minimaler Quantenenergie nicht größer sein als das Verhältnis zwischen maximalem und minimalem Impulsübertrag. Jedoch ist eine sehr komplizierte Sekundärblendenanordnung erforderlich, um zu erreichen, daß alle Detektorelemente nur unter diesem Streuwinkel von Streustrahlung getroffen werden können. Die Sekundärblendenanordnung muß dabei eine Anzahl von langgestreckten Kollimatorkörpern enthalten, die in geringem Abstand voneinander angeordnet sind. Eine derartige Sekundärblendenanordnung ist aber allenfalls mit großem Aufwand herstellbar.

Aufgabe der Erfindung ist es, eine Anordnung der eingangs genannten Art so auszubilden, daß einerseits die Sekundärblendenanordnung relativ einfach sein kann, andererseits der erforderliche Energiebereich der Röntgenquanten im Vergleich zu der Anordnung nach der EP OS 462 658 reduziert werden kann.

Diese Aufgabe wird erfindungsgemäß dadurch gelöst, daß die Anordnung so ausgebildet und die schlitzförmigen Öffnungen in der Sekundärblendenanordnung so angeordnet sind, daß durch jede der Öffnungen die Streustrahlung jeweils nur aus einem Teil des Untersuchungsbereichs zur Detektoranordnung gelangen kann, wobei die Streustrahlung aus einem näher bei der Röntgenstrahler befindlichen Teil des Untersuchungsbereichs von in geringerem Abstand von der Systemachse befindlichen Detektorelementen erfaßt wird als Streustrahlung aus einem weiter vom Röntgenstrahler entfernten Teil des Untersuchungsbereichs und daß die Teile des Untersuchungsbereiches, deren Streustrahlung durch die Öffnungen hindurch von der Detektoranordnung erfaßt wird, sich nicht oder nur geringfügig überlappen.

Bei der Erfindung verteilt sich also die durch das Primärstrahlenbündel im Untersuchungsbereich erzeugte Streustrahlung auf mehrere Öffnungen. Keine dieser Öffnungen bildet also den gesamten Untersuchungsbereich auf die Detektoranordnung ab. Die Streustrahlung aus aneinander angrenzenden Teilen des Unteruchungsbereichs fällt durch benachbarte Öffnungen in der Sekundärblendenanordnung auf die Detektorelemente, so daß jeder Abschnitt des vom Primärstrahlenbündel durchsetzten Untersuchungsbereichs nur durch jeweils eine der schlitzförmigen Öffnungen in der Sekundärblendenanordnung Streustrahlung zu der Detektoranordnung emittieren kann.

Da immer nur ein Teil des Untersuchungsbereichs durch einen Schlitz hindurch auf die Detektoranordnung abgebildet wird, verringert sich der Winkel, unter dem sich in der Öffnung die Randstrahlen von diesem Teil zur Detektoranordnung kreuzen. Dadurch reduziert sich das Verhältnis zwischen maximalem und minimalem Streuwinkel, so daß sich - bei vorgegebenem Impulsübertragsbereich - der erforderliche Bereich der Quantenenergie verringert (im Vergleich zu einer Anordnung nach der EP-OS 462 658).

Die verschiedenen Teile des Untersuchungsbereiches sollen sich nicht überlappen. Wegen der von Null verschiedenen Breite der schlitzförmigen Öffnungen läßt sich aber nicht vermeiden, daß Streustrahlung aus dem Randbereich eines über einen Schlitz einer Gruppe von Detektorelementen zugeordneten Teils des Untersuchungsbereiches durch einen anderen Schlitz auch andere Detektorelemente erreicht. Dieser Anteil soll jedoch klein sein und z.B. weniger als 5 % der Streustrahlung betragen; die Angabe "nicht oder nur geringfügig überlappen" muß daher in diesem Sinne interpretiert werden.

In Ausgestaltung der Erfindung ist vorgesehen, daß die Sekundärblendenanordnung mit n Abbildungsschlitzen versehen ist, wobei n eine ganze Zahl größer als 2 ist und daß durch die Abbildungsschlitze Gruppen von Detektorelementen von Streustrahlung aus aneinander angrenzenden Teilen des Untersuchungsbereichs getroffen werden, wobei die Detektorelemente einer Gruppe und der ihnen durch einen Abbildungsschlitz zugeordnete Teil des Untersuchungsbereichs einen umso größeren Abstand von der Systemachse aufweisen, je größer der Krümmungsradius des zugeordneten Abbildungsschlitzen ist. Der Untersuchungsbereich wird dabei also in n Teile unterteilt, dessen Streustrahlung durch jeweils einen der n Schlitze eine der n Gruppen von Detektorelementen trifft. Dadurch ergibt sich eine deutliche Verringerung des Streuwinkelbereichs und damit auch des Energiebereichs der Röntgenquanten, der für einen bestimmten Impulsübertragsbereich erforderlich ist.

Eine Weiterbildung der Erfindung sieht vor, daß der Untersuchungsbereich die Mitte zwischen dem Röntgenstrahler und der Detektoranordnung umschließt und daß vorzugsweise die Mitte dichter an der detektorseitigen Grenze als an der strahlerseitigen Grenze des Untersuchungsbereichs liegt. Bei vorgegebenen Detektorabmessungen und vorgegebenem (mittlerem) Streuwinkel ergeben sich bei dieser Ausgestaltung die geringsten Abstände zwischen Röntgenstrahler und Detektorebene und/oder die größten Abmessungen (Durchmesser) des Primärstrahlenbündels im Untersuchungsbereich. Je größer die Abmessungen des Primärstrahlenbündels im Untersuchungsbereich sind, desto schneller kann ein Untersuchungsobjekt, beispielsweise ein Gepäckstück, untersucht werden.

Im einfachsten Fall können die Abbildungsschlitze in einer ebenen Blendenplatte aus einem Strahlen absorbierenden Material enthalten sein. Je größer dabei aber die Tiefe des Untersuchungsbereichs im Vergleich zu seinem Abstand von der Detektorebene ist, desto stärker macht sich bemerkbar, daß für die einzelnen Schlitze unterschiedliche Abbildungsmaßstäbe gelten. Der Abbildungsmaßstab entspricht dem Quotienten aus der Entfernung des Detektorelementes von dem ihm zugeordneten Schlitz und der Entfernung des diesem Detektorelement zugeordneten Untersuchungsabschnitts von dem Schlitz. Dies bedeutet, daß die mittleren Streuwinkel der die einzelnen Abbildungsschlitze durchsetzenden Streustrahlung sich von Schlitz zu Schlitz ändern. Dies hat aus den eingangs erläuterten Gründen zur Folge, daß für einen bestimmten Impulsübertragsbereich ein relativ großer Energiebereich der Röntgenquanten erforderlich ist.

Man kann den Abbildungsmaßstab konstant halten, wenn man die Abbildungsschlitze nicht in einer Ebene anordnet, sondern in unterschiedlichen Ebenen, wobei der Abbildungsmaßstab eines Abbildungsschlitzes umso größer ist, je kleiner sein Abstand von der Detektorebene ist. In diesem Fall müßte die Sekundärblendenanordnung entweder einen relativ komplizierten nicht ebenen Blendenkörper enthalten oder aber für jeden Schlitz eine gesonderte Blendenplatte.

Demgegenüber sieht eine Weiterbildung der Erfindung vor, daß die Sekundärblendenanordnung wenigstens zwei ebene Blendenplatten umfaßt, die neben Abbildungsschlitzen Selektionsschlitze aufweisen, so daß die von den einzelnen Detektorelementen erfaßte Streustrahlung einen Abbildungsschlitz und mindestens einen Selektionsschlitz durchsetzt. Hierbei kann die Zahl der Blendenplatten kleiner sein als die Zahl der Schlitze. Jede Blendenplatte hat insofern eine Doppelfunktion, als sie einerseits Abbildungsschlitze und andererseits die (breiteren) Selektionsschlitze enthält, die sicherstellen, daß jedes Detektorelement nur von Streustrahlung aus einem bestimmten Untersuchungsabschnitt getroffen werden kann.

Um sicherzustellen, daß jedes Detektorelement von Streustrahlung nur unter einem relativ genau definierten Winkel getroffen wird, müssen Streustrahlen unterdrückt werden, die zu den die Systemachse enthaltenden Ebenen unter einem relativ großen Winkel verlaufen. Zu diesem Zweck sieht eine Weiterbildung der Erfindung vor, daß zwischen dem Untersuchungsbereich und der Detektoranordnung eine Kollimatoranordnung mit Lamellen zur Absorption von Röntgenstrahlung vorgesehen ist und daß die Lamellen in Ebenen liegen, die die Systemachse enthalten.

Nach einer ersten Ausgestaltung kann dabei vorgesehen sein, daß die Lamellen in Richtung senkrecht zur Systemachse unterschiedliche Abmessungen haben, so daß der Zwischenraum zwischen den Lamellen sich als Funktions des Abstands von der Systemachse möglichst wenig ändert. Nach einer zweiten Weiterbildung, die mit der vorangehenden gegebenenfalls kombiniert werden kann, ist vorgesehen, daß die Lamellen auf ihrer der Systemachse zugewandten Seite kürzer sind als auf der davon abgewandten Seite.

Die Erfindung wird nachfolgend anhand der Zeichnungen näher erläutert. Es zeigen:

Fig. 1 eine erste Ausführungsform der Erfindung,

Fig. 2 einen Teil der Anordnung nach Fig. 1,

Fig. 3 eine zweite Ausführungsform der Erfindung und

Fig. 4 eine dritte Ausführungsform der Erfindung.

Fig. 5 eine vierte Ausführungsform in einer schematischen Darstellung und

Fig. 6 eine insbesondere für diese Ausführungsform geeignete Form der Lamellen des Kollimators in Fig. 2.

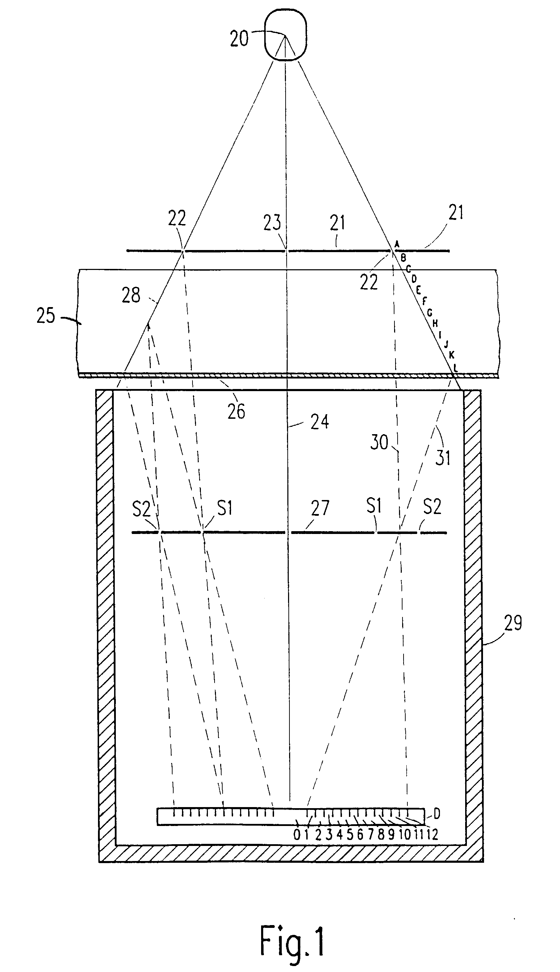

Die in den Figuren 1, 3 und 5 dargestellten Ausführungsformen sind nicht maßstäblich dargestellt. Die Abmessungen in horizontaler Richtung sind im Vergleich zu denen in vertikaler Richtung ungefähr um einen Faktor 10 vergrößert.

Mit 20 ist ein polychromatischer Röntgenstrahler bezeichnet, vorzugsweise eine Röntgenröhre mit einer Anode, in deren Brennfleck (Fokus) durch Elektronenbeschuß polychromatische Röntgenstrahlung (Bremsstrahlung) erzeugt wird. Bei einer Röhrenspannung von z.B. 150 kV kann eine solche Röntgenröhre zumindest im Energiebereich zwischen etwa 35 keV und 100 keV Röntgenquanten emittieren. Ein annähernd "weißes" Bremsstrahlungsspektrum (ohne die charakteristischen Linien der K-Kanten) kann mit einer Molybdänanode erzielt werden, die eine niedrige K-Kante (ca. 20 KeV) mit einem hohen Schmelzpunkt (ca. 2600°) vereinigt.

Die Röntgenstrahlung fällt auf eine Platte 21, die aus einem solchen Material besteht und so dick ist, daß sie die Röntgenstrahlung praktisch vollständig absorbieren kann. Jedoch ist die Platte 21 mit einem kreisringförmigen Schlitz 22 versehen, so daß dahinter 21 ein Primärstrahlenbündel (28) ausgeblendet wird, das die Form der Mantelfläche eines Kegelstumpfes hat. Die Platte 21 wird im folgenden auch als Primär-Blendenanordnung bezeichnet, weil sie das Primärstrahlenbündel definiert. Der halbe Öffnungswinkel des Primärstrahlenbündels beträgt im Bogenmaß 0,041 rad bei einem Abstand zwischen Strahler 20 und Blende 21 von 744 mm.

Die Primär-Blendenanordnung 21 ist außerdem mit einem Loch 23 versehen, das sich im Zentrum des kreisförmigen Schlitzes 22 befindet und somit einen Zentralstrahl 24 ausblendet, der den Untersuchungsbereich ebenfalls durchsetzt und die Symmetrieachse der Anordnung bildet. Im vorliegenden Fall sind Symmetrie- und Systemachse somit identisch und der Zentralstrahl fällt mit diesen Achsen zusammen. Der Untersuchungsbereich, in dem sich das zu untersuchende Objekt 25 befindet, beispielsweise ein Koffer, wird durch die Blendenplatte 21 und durch eine dazu parallele, für die Röntgenstrahlung transparente Platte 26 begrenzt, die weiter vom Fokus 20 entfernt ist als die Platte 21 und von dieser beispielsweise einen Abstand von 450 mm aufweist.

Das Objekt 25 und die Untersuchungsanordnung mit dem Röntgenstrahler 20 sind relativ zueinander in zwei zum Zentralstrahl 24 senkrechten Richtungen verschiebbar, so daß durch eine mäanderförmige Abtastbewegung das gesamte Objekt 25 nacheinander untersucht werden kann.

Zur Erfassung der durch das Primärstrahlenbündel 28 im Objekt erzeugten Streustrahlung ist eine ebene Detektoranordnung D mit einer Anzahl von zur Achse 24 konzentrischen, ringförmigen Detektorelementen vorgesehen, die in der Lage sind, die Energie der auf sie auftreffenden Röntgenquanten energieaufgelöst zu messen. Die Eingangsebene der Detektoranordnung befindet sich in einem Abstand von 2744 mm vom Fokus. Die Detektoranordnung besteht aus zwölf ringförmigen, zur Achse 24 konzentrisch angeordneten Detektorelementen. Der Innenradius des innersten Detektorelements beträgt 5,465 mm und der Außenradius des äußersten Detektorelements 34,693 mm.

Unter diesen geometrischen Verhältnissen kann nur diejenige im Primärstrahlenbündel erzeugte Streustrahlung die Detektoranordnung D erreichen, die aus dem Primärstrahlenbündel unter einem Streuwinkel von weniger als 4° aus tritt. Die Streustrahlung in diesem Streuwinkelbereich ist im wesentlichen elastische Streustrahlung, die bekanntlich ihre Wellenlänge beim Streuprozeß nicht ändert (im Gegensatz zur Compton-Streustrahlung). Das Impulsübertragsspektrum von elastisch gestreuter Röntgenstrahlung ist kennzeichnend für die (kristalline) Struktur des Körpers, in dem der Streuprozeß stattfindet. Daher können bestimmte Stoffe im Innern des Untersuchungsobjektes 25 anhand ihres Impulsübertragsspektrums identifiziert werden. Es ist auf diese Weise möglich, bestimmte Stoffe, beispielsweise Sprengstoff, im Innern eines Gepäckstückes zu identifizieren.

Die Detektoranordnung D befindet sich im Innern eines rohrförmigen, mit einer Bodenplatte versehenen Gehäuses 29, das die gesamte Primärstrahlung und die Streustrahlung absorbieren kann, die die Begrenzungsplatte 26 durchsetzt und die Detektoranordnung D nicht erreicht. Im Innern des Gehäuses ist außerdem eine Sekundär-Blendenanordnung 27 vorgesehen, die aus einer ebenen, kreisförmigen Platte aus einem die Röntgenstrahlung absorbierenden Material besteht. Die Ebene der Blendenplatte ist 1774,65 mm vom Fokus entfernt; sie liegt in dem Schnittpunkt der Randstrahlen 30 und 31, die den inneren Rand des Primärstrahlenbündels 28 im Untersuchungsbereich mit dem äußeren Rand der Detektoranordnung bzw. den äußeren Rand des Primärstrahlenbündels mit dem inneren Rand der Detektoranordnung verbinden. Diese Position der Blendenplatte wird als 1 : 1-Position bezeichnet, weil durch eine Öffnung in der Platte 27 am Orte des Schnittpunktes hindurch das gesamte Primärstrahlenbündel im Untersuchungsbereich auf die Detektoranordnung D abgebildet werden könnte.

Durch den erwähnten Schnittpunkt der Randstrahlen 30 und 31 und die Detektorelemente 1....12 werden auf dem Primärstrahl von innen nach außen zwölf Abschnitte A....L definiert. Wäre nämlich am Orte des Schnittpunktes eine Öffnung in der Blendenplatte, dann würden die Detektorelemente 1, 2 .... 11, 12 Streustrahlung aus den Abschnitten L, K ... B, A empfangen. Die Abschnitte im Primärstrahlenbündel sind also jeweils einem Detektorelement zugeordnet. Die Abmessungen dieser Abschnitte - in Richtung der Achse 24 - nehmen von innen nach außen ab, wenn die Detektorelemente die weiter unten angegebenen Abmessungen haben.

Die Blendenplatte ist jedoch nicht mit einer Öffnung in dem erwähnten Schnittpunkt versehen, sondern mit zwei schlitzförmigen Öffnungen $S_1$ und $S_2$, die die Form von zur Achse 24 konzentrischen Ringen aufweisen. Die Schlitze $S_1$, $S_2$ haben Radien von 25,60 bzw. 38,67 mm und eine Breite von ca. 0,5 mm. Durch die beiden Schlitze hindurch wird der aus den Abschnitten A....F bestehende innere, dichter beim Röntgenstrahler liegende Teil des Untersuchungsbereichs auf die inneren Detektorelemente 1....6 und der verbleibende äußere, vom Röntgenstrahler 20 weiter entfernter liegende Teil des Untersuchungsbereichs aus den Abschnitten G bis L auf die restlichen Detektorelemente 7....12 gebildet. Die Abbildung erfolgt in der Weise, daß die Detektorelemente 1, 2....6 durch den Abbildungsschlitz $S_1$ hindurch Streustrahlung aus den Abschnitten F, E....A erfassen, während die Detektorelemente 7, 8....12 durch den zweiten Abbildungsschlitz $S_2$ hindurch Streustrahlung aus den Abschnitten L, K....G erfassen.

Grundsätzlich können die Abmessungen der Detektorelemente frei gewählt werden, z.B. so, daß alle Detektorelemente die gleiche Breite haben. Jedoch sind die Innenradien $r_i$ und die Außenradien $r_a$ der Detektorelemente wie folgt gewählt:

$$r_i(n) = R - R_o \cdot \exp\left(((n_o - n) \cdot p + b_i) / Ro\right) \qquad (1)$$

$$r_a(n) = R - R_o \cdot \exp\left(((n_o - n) \cdot p - b_a) / Ro\right) \qquad (2)$$

Der Wert R stellt den Radius des Kreises dar, unter dem das Primärstrahlenbündel 28 die Eingangsebene des Detektors schneiden würde. Mit den zuvor angegebenen Werten für den Abstand des Detektors D vom Fokus 20 und für den Öffnungswinkel errechnet sich für R ein Wert von 112,5 mm. Für n ist die von innen nach außen gezählte Nummer des Detektorelementes einzusetzen; im Ausführungsbeispiel reicht n von 1 bis 12. $n_o$ ist eine ganze Zahl vorzugsweise zwischen 1 und 12; im vorliegenden Fall wurde $n_o = 6$ gesetzt. $R_o$ ist die Differenz zwischen dem Radius R und dem Radius, auf dem sich das Detektorelement $n_o$ befinden soll. Ein geeigneter Wert für $R_o$ (bei $n_o = 6$) ist 92,5 mm. Die Werte $b_i$ und $b_a$ geben an, wie weit von dem Kreis mit dem Radius R-Ro der innere bzw. der äußere Rand des Detektorelements $n_o$ liegen soll; im Ausführungsbeispiel sind $b_i$ und $b_a$ jeweils 1 mm. Der Wert p muß größer sein als die Summe von $b_i$ und $b_a$. Je größer dieser Wert im Vergleich zur Summe gewählt wird, desto größer ist der Zwischenraum zwischen den benachbarten Detektorelementen. Im Ausführungsbeispiel wurde p = 2,5 mm gewählt.

Es läßt sich zeigen, daß die Breite der auf diese Weise berechneten Detektorelemente (ebenso wie der Zwischenraum zwischen benachbarten Detektorelementen) proportional mit der Differenz zwischen dem Radius R und dem (in der Mitte gemessenen) Radius des betreffenden Detektorelementes zunimmt. Weiterhin ist die radiale Winkelungenauigkeit (d.h. die Breite eines Detektorelements dividiert durch die Strecke, die ein gestreutes Röntgenquant vom Primärstrahlenbündel bis zu diesem Detektorelement zurücklegt) konstant, was bei manchen Anwendungen von Vorteil sein kann.

Die Ausgangssignale der Detektorelemente können so verarbeitet werden, wie das in den genannten Veröffentlichungen beschrieben ist, sowie insbesondere in der deutschen Patentanmeldung P 41 01 544.4. Diese Verarbeitung soll deshalb an dieser Stelle nicht noch einmal im einzelnen erläutert werden. Es sei lediglich erwähnt, daß für jedes Detektorelement (mit Einschluß des Detektorelements im Zentrum, das den Zentralstrahl 24 erfaßt) ein Verarbeitungskanal vorgesehen ist, in dem das Signal verstärkt, digitalisiert und einem Impulshöhenanalysator zugeführt wird, der die Zahl der Röntgenquanten in den verschiedenen Energiebereichen registriert. Für jedes Detektorelement und für jeden Energiebereich wird diese Zahl durch die Zahl der Röntgenquanten dividiert, die mit Hilfe des zentralen Detektorelements 0 für den betreffenden Energiebereich registriert worden sind. Daraus ergibt sich für jedes Detektorelement das Energiespektrum, und zwar unabhängig von der Energieverteilung der von dem Röntgenstrahler 20 emittierten Röntgenquanten und weitgehend unabhängig von der Schwächung der Streustrahlung durch das Objekt 25. Da der Impulsübertrag eines elastisch gestreuten Röntgenquants dem Produkt aus seiner Energie und dem Sinus des halben Streuwinkels proportional ist und da der Streuwinkel bekannt ist, unter dem ein bestimmtes Detektorelement Streustrahlung aus dem ihm zugeordneten Abschnitt des Primärstrahlenbündels empfängt, lassen sich aus den Energiespektren, die mittels der verschiedenen Detektorelemente gewonnen wurden, die Impulsübertragsspektren für die Abschnitte A....L berechnen, die den betreffenden Detektorelementen zugeordnet sind.

Ein Vorteil der Erfindung gegenüber der Anordnung nach der EP-OS 462 658 besteht darin, daß die Streuwinkel, unter denen die Detektorelemente 1...12 Streustrahlung aus dem Primärstrahlenbündel empfangen können, nur verhältnismäßig wenig differieren. Das Verhältnis zwischen dem maximalen Streuwinkel und dem minimalen Streuwinkel beträgt nur noch etwa 1,37. Das bedeutet, daß die maximale von der Detektoranordnung gemessene Quantenenergie nur rund dreimal größer sein muß als die minimale Quantenenergie (bei der bekannten Anordnung ist dieser Faktor 4), wenn in allen Abschnitten ein Bereich des Impulsübertrages erfaßt werden soll, dessen Maximalwert 2,25 mal größer ist als sein Minimalwert. Anstelle eines Quantenenergiebereichs von 30 keV bis 120 keV beim Stand der Technik würde also ein Bereich von 32 keV bis 99 keV genügen.

Damit das Impulsübertragsspektrum möglichst genau bestimmt werden kann, muß der Streuwinkel, den die von einem Detektorelement erfaßte Streustrahlung mit dem Primärstrahl einschließt, möglichst genau definiert sein. Deshalb sollte nur solche Streustrahlung registriert werden, bei der der Streustrahl in der Ebene verläuft, die durch den ihn hervorrufenden Primärstrahl und den Zentralstrahl 24 definiert wird, zumindest aber in einem sektorförmigen Bereich um diese Ebene herum.

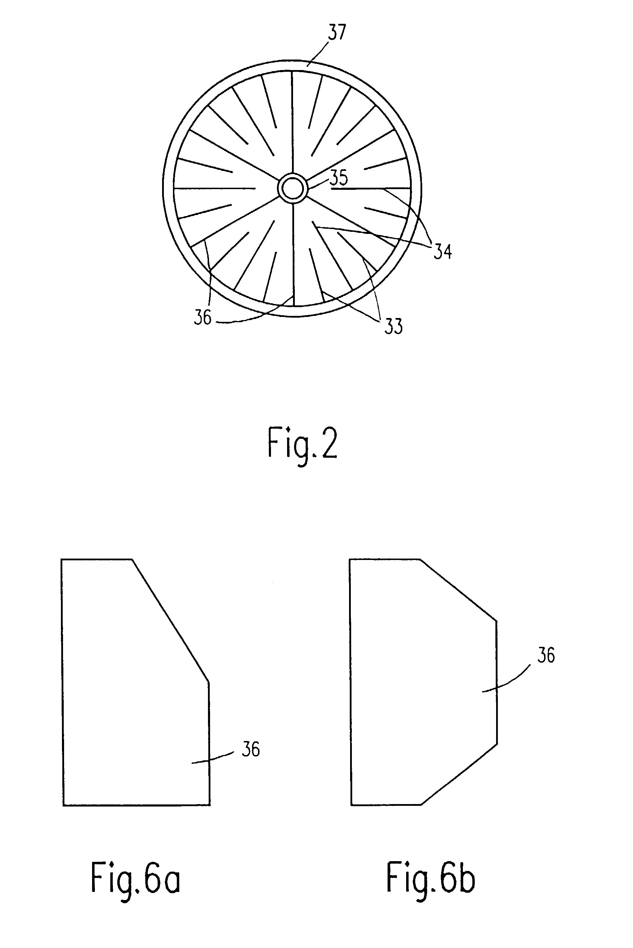

Um die übrige Streustrahlung zu unterdrücken, ist ein zweiteiliger Kollimator vorgesehen. Dieser ist in Fig. 1 der Einfachheit halber fortgelassen und in Fig. 2 in einer Draufsicht dargestellt. Der zur Achse 24 symmetrisch gestaltete Kollimator besteht aus einem ersten Teil mit einem Rohr 35 aus einem die Röntgenstrahlung stark absorbierenden Material, durch das der Zentralstrahl 24 durchtreten kann und der auf der Außenseite gleichmäßig auf dem Umfang verteilte, radial verlaufende Lamellen 36 aufweist. Der zweite Teil des Kollimators umfaßt ein Rohr 37 aus einem die Röntgenstrahlung stark absorbierenden Material, das die Lamellen 36 umschließt und periodisch über seinen Umfang versetzte, nach innen gerichtete Lamellen 33 und 34 aufweist. Alle Lamellen liegen in Ebenen, die sich in der Systemachse 24 schneiden.

Der erste Teil wird nach seiner Herstellung in den zweiten geschoben, wobei der zweite für die Lamellen vorzugsweise nicht näher dargestellte Nuten aufweist, so daß die beiden Kollimatorteile relativ zueinander eine definierte Position einnehmen. Der Kollimator kann in Längsrichtung unterteilt sein, so daß ein erster Teil zwischen den Platten 26 und 27 und ein zweiter Teil zwischen den Platten 27 und der Detektoranordnung D angeordnet ist.

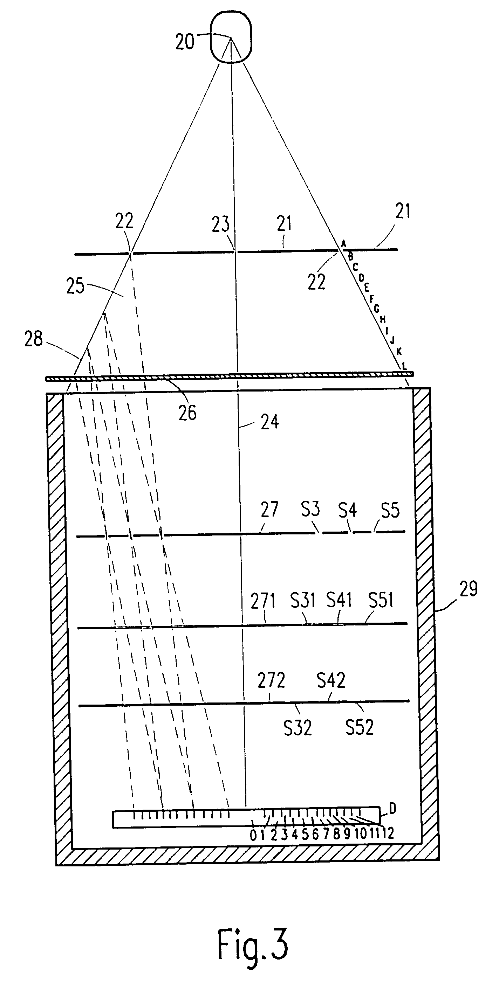

In Fig. 3 ist eine Ausführungsform der Erfindung dargestellt, die eine noch stärkere Reduktion des für einen bestimmten Impulsübertragsbereich erforderlichen Energiebereiches der Röntgenquanten gestattet.

Die Blendenplatte, die sich ebenfalls in der in Verbindung mit Fig. 1 beschriebenen 1 : 1-Position (1.774,65 mm vom Fokus entfernt) befindet, ist mit drei zur Achse 24 konzentrischen, ringförmigen Abbildungsschlitzen $S_3$, $S_4$, und $S_5$ versehen. Durch den inneren Abbildungsschlitz $S_3$ (mit einem Radius von 22,98 mm) hindurch wird Streustrahlung aus dem durch die inneren Abschnitte A....D des Primärstrahlenbündels gebildeten Teil des Untersuchungsbereichs von den Detektorelementen 1....4 erfaßt, und zwar derart, daß das Element 1 den Abschnitt D und das Element 4 den Abschnitt A "sieht". Durch den mittleren Abbildungsschlitz $S_4$ (mit einem Radius von 32,66 mm hindurch wird ein mittlerer Teil des Untersuchungsbereichs auf eine zweite aus den Detektorelementen 5....8 bestehende Gruppe abgebildet. Dabei erfaßt das Element 5 Streustrahlung aus dem Abschnitt H und das Element 8 Streustrahlung aus dem Abschnitt E. Durch den äußeren Abbildungschlitz $S_5$ (mit einem Radius von 40,46 mm) schließlich gelangt Streustrahlung aus dem äußeren die Abschnitte I bis L umfassenden Teil des Untersuchungsbereichs auf die Elemente 9-12, wobei das Detektorelement 9 den Abschnitt L und das Detektorelement 12 den Abschnitt I "sieht".

Wenn nur die Blendenplatte 27 vorhanden wäre, wäre es unvermeidlich, daß Streustrahlung aus dem unteren Teil (I-L) des Untersuchungsbereiches durch den mittleren Schlitz $S_4$ auf die innere Detektorgruppe (1-4) gelangt bzw. daß Streustrahlung aus dem inneren Teil (A-D) des Untersuchungsbereiches ebenfalls durch $S_4$ auf die äußere Gruppe (9-12) von Detektorelementen fällt. Diese unerwünschte Streustrahlung könnte mit Hilfe von zwei entsprechend der Mantelfläche von Kegelstümpfen geformten, zueinander konzentrischen Kollimatorkörpern beseitigt werden, die die innere bzw. äußere Gruppe gegen die unerwünschte Streustrahlung abschirmen. Diese Abschirmmittel wären aber konstruktiv schwierig mit dem in Fig. 2 dargestellten Kollimator zu vereinen, der auch bei der Anordnung nach Fig. 3 erforderlich ist.

Deshalb sind zwei weitere Blendenplatten 271 und 272 in einem Abstand von 2100 bzw. 2410 mm vom Fokus 20 vorgesehen, von denen jede drei zur Achse 24 konzentrische ringförmige Schlitze $S_{31}$, $S_{41}$ und $S_{51}$ bzw. $S_{32}$, $S_{42}$ und $S_{52}$ aufweist. Die Breite dieser Schlitze ist so bemessen, daß die Streustrahlung (z.B. aus dem Bereich E - H) durch den zugehörigen Schlitz ($S_4$) in der Sekundärblende 27 hindurch ungehindert die zugeordnete Gruppe (5-8) von Detektorelementen erreichen kann, daß aber Streustrahlung von anderen Bereichen auf ihrem Weg durch diesen Schlitz zu einer anderen Gruppe von Detektorelementen unterdrückt wird. Die Schlitze $S_{31}$....$S_{51}$ bzw. $S_{32}$....$S_{52}$ selektieren die

Streustrahlung aus einem bestimmten Abschnitt des Untersuchungsbereichs. Sie werden daher im folgenden auch Selektionsschlitze genannt. Die Selektionsschlitze sind breiter als die zugehörigen Abbildungsschlitze.

Bei der Anordnung nach Fig. 3 muß der Kollimatorkörper 33....37 in mehrere Teile unterteilt sein, von denen einer zwischen dem Untersuchungsbereich und der Blendenplatte 27, ein weiterer zwischen der Blendenplatte 27 und der Platte 271, ein dritter zwischen den Platten 271, 272 und ein vierter schließlich zwischen der Platte 272 und der Detektoranordnung D angeordnet sein kann.

Der Vorteil der Anordnung nach Fig. 3 gegenüber derjenigen nach Fig. 1 ist darin zu sehen, daß der Streuwinkelbereich noch weiter reduziert wird, so daß der Quotient aus dem maximalen und dem minimalen Streuwinkel nur noch ca. 1,2 beträgt, was bei einem in allen Abschnitten zu erfassenden Impulsübertragsbereich von 2,25 : 1 einen Energiebereich der Röntgenquanten von ca. 2,7 : 1 erfordert, so daß die Röntgenquanten nur noch eine Energie im Bereich von ca. 36 keV bis 100 keV benötigen. Auf der anderen Seite werden im Gegensatz zu der Anordnung nach Fig. 1 Mittel benötigt, die - wie die Blenden 271 und 272 - die Detektorelemente vor Streustrahlung abschirmen, die nicht aus dem ihnen zugeordneten Teil des Untersuchungsbereichs stammt.

Bei der Anordnung nach Fig. 1 sind derartige Abschirmmittel überflüssig: Streustrahlung aus dem inneren Teil (A bis F) des Untersuchungsbereiches, die durch den äußeren Schlitz $S_2$ hindurchtritt, trifft außerhalb des äußersten Detektorelementes 12 auf. Streustrahlung vom äußeren Abschnitt (F....L), die durch den inneren Schlitz $S_1$ fällt, trifft auf den inneren Teil des Kollimatorkörpers 35 auf (vergl. Fig. 2) und wird von diesem absorbiert. -

Es leuchtet ein, daß eine weitere Reduzierung des Streuwinkelbereiches und damit des für einen bestimmten Impulsübertragsbereich erforderlichen Energiebereiches der Röntgenquanten erreicht werden kann, wenn - bei unveränderter Position der Blendenplatte 27 - in dieser mehr als drei Schlitze derart angeordnet sind, daß durch jeden Schlitz hindurch jeweils eine Gruppe von Detektorelementen Streustrahlung aus einem Teil des Untersuchungsbereichs erfassen kann. Die durch verschiedene Schlitze hindurch erfaßten Teile sollen aneinander angrenzen, dürfen sich jedoch nicht überlappen. Wie dabei die Lage der Blende 27 und die Radien der Abbildungsschlitze - unabhängig davon, ob sie den Gleichungen (1) bzw. (2) genügen oder nicht - bestimmt werden können, soll im folgenden (zeichnerisch nicht dargestellten) Beispiel erläutert werden (für vier Abbildungsschlitze).

Es wird ein erster Strahl vom Innenrand des Abschnitts A zum Außenrand des Detektorelements 12 gezogen und ein zweiter Strahl vom Außenrand des äußersten Abschnitts L zum Innern des Detektorelements 1, wobei die beiden Strahlen zusammen mit der Systemachse 24 in einer Ebene liegen sollen. Der Schnittpunkt dieser beiden Strahlen (30 und 31 in Fig. 1) definiert dann die Ebene, in der sich die Abschirmblende befinden soll.

Weiterhin wird ein Strahl vom Innenrand des innersten Abschnitts A zum äußeren Rand des Detektorelements 3 gezogen. Der Durchstoßpunkt dieses Strahles (der wie die im folgenden noch erwähnten Strahlen mit der Systemachse in einer Ebene liegen soll) durch die Ebene der Blendenplatte bestimmt die Lage des ersten (innersten Schlitzes). Nun wird ein Strahl vom Innenrand des innersten Detektorelements durch den Schlitz gezogen. Dieser Strahl kreuzt das Primärstrahlenbündel 28 an der Grenze zwischen den Bereichen C und D. Von diesem Kreuzungspunkt wird ein Strahl zum Außenrand des Detektorelements 6 gezogen, der die Ebene der Blendenplatte dort durchstößt, wo der zweite Abbildungsschlitz liegen muß usw.

Dieses Verfahren wird zur Ermittlung der Lage des dritten und vierten Abbildungsschlitzes entsprechend fortgeführt.

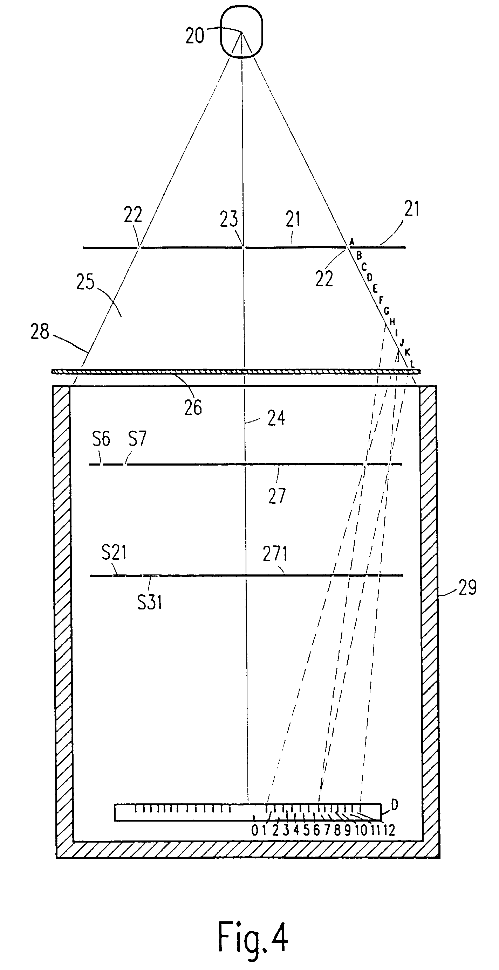

In Fig. 4 ist eine Ausführungsform der Erfindung dargestellt, die in Richtung der Systemachse 24 ein besseres räumliches Auflösungsvermögen aufweist als die Ausführungsform nach Fig. 1 oder 2. Die Sekundärblende 27 befindet sich dabei in einer 2:1 Position, d.h. durch einen einzigen Schlitz, in dieser Position könnten die zwölf Detektorelemente stets nur die Streustrahlung von sechs aufeinanderfolgenden Abschnitten erfassen, z.B. von den Abschnitten D....H. Jeweils zwei benachbarte Detektorelemente würden dabei einen Abschnitt erfassen, wobei das Innere dieser beiden Elemente den äußeren Teil des betreffenden Abschnitts und das äußere Detektorelement den inneren Teil dieses Abschnitts erfassen würde. In der 2:1 Position hat die Blendenplatte 27 von dem Fokus einen Abstand von 1503 mm.

In der Platte befinden sich zwei zur Achse 24 konzentrische ringförmige Schlitze $S_6$ und $S_7$. Durch den äußeren Schlitz $S_6$ hindurch, dessen Radius 43,5 mm beträgt, empfangen die Detektorelemente 7..12 Streustrahlung aus den Abschnitten J....L, wobei Streustrahlung aus dem inneren Teil des Abschnittts J das Element 12 und aus dem äußeren Teil des Elements des Abschnitts J das Element 11 trifft; die Streustrahlung aus dem Abschnitt L wird von den Detektorelementen 7 und 8 erfaßt.

Der innere Schlitz $S_7$ hat einen Radius von 36,5 mm. Durch ihn hindurch könnten die Elemente 1....12 von Streustrahlung aus den Abschnitten D....I getroffen werden. Eine Abschirmblende 271 mit Schlitzen $S_{21}$ und $S_{31}$ verhindert jedoch, daß die Detektorelemente 7....12 durch den Schlitz $S_7$ hindurch von Streustrahlung (aus den Abschnitten D....F) getroffen werden. Somit ist jedem Detektorelement nur ein einziger Teilabschnitt des Primärstrahlenbündels zugeordnet, wobei die Teilabschnitte sich nicht überlappen und einen zusammenhängenden Teil des Untersuchungsbereichs bilden. Man erkennt, daß die Streuwinkel, aus denen die Detektorelemente Streustrahlung empfangen können, nur vergleichsweise wenig variieren, so daß auch hier wieder das Verhältnis von maximaler zu minimaler Quantenenergie nur geringfügig größer sein muß als das Verhältnis von maximalem Impulsübertrag zu minimalem Impulsübertrag der innerhalb der Teilabschnitte nachgewiesen werden soll.

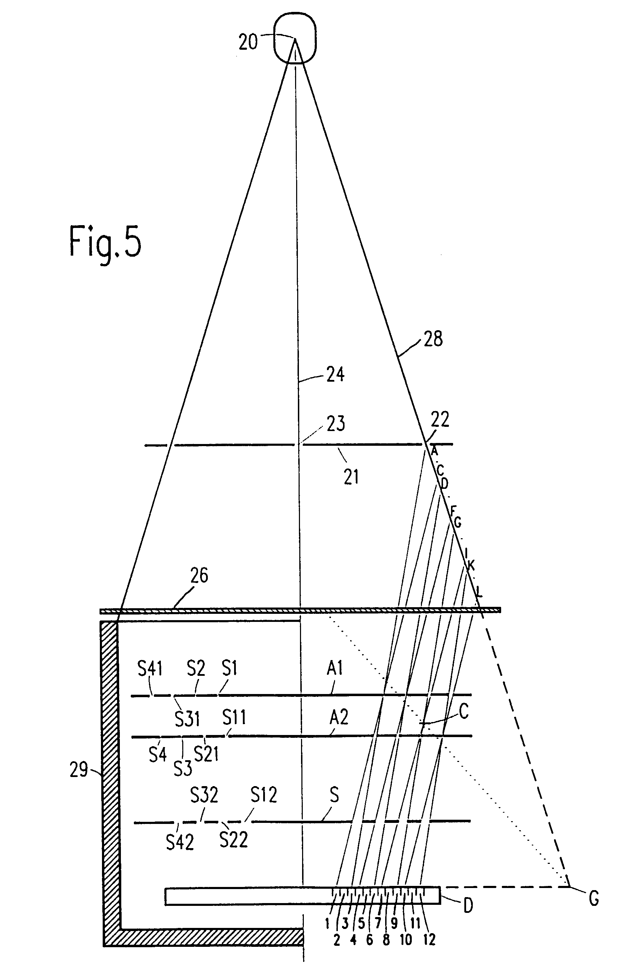

Es wäre bei der Anordnung nach Fig. 4 weiterhin möglich, einen dritten Schlitz vorzusehen, durch den hindurch Streustrahlung aus den Abschnitten A....C die Detektorelemente 6....1 treffen würde. Wenn dann die Abschirmblende 271 weggelassen würde, würde der gesamte Untersuchungsbereich A....L von den Detektorelementen erfaßt, und zwar in der Weise, daß jedes Detektorelement zwei verschiedene Teilabschnitte sehen würde (beispielsweise das Detektorelement 12 den inneren Teilabschnitt von D und von J). Die Auswertung wird dadurch schwieriger, ist aber möglich, wie in der europäischen Patentanmeldung 462 658 in Verbindung mit deren Fig. 5 erläutert.

Das anhand von Fig. 4 für eine 2 : 1-Abbildung gesagte gilt auch für eine 3 : 1- bzw. 4 : 1-Abbildung entsprechend. Diese Position ist noch dichter am Untersuchungsbereich als die 2 : 1-Position gem. Fig. 4 (für eine 3 : 1-Position beträgt der Abstand vom Fokus nur noch 1381,9 mm). Bei einer 3:1- Abbildung können jeweils sechs Detektorelemente zwei Abschnitte "sehen". Wenn die Detektorelemente jeweils nur aus einem einzigen Teilabschnitt von Streustrahlung getroffen werden, erfordern die Abschirmmittel, mit denen Streustrahlung unterdrückt werden soll, die durch den "falschen" Schlitz verläuft, einen komplizierteren Aufbau. Läßt man hingegen zu, daß die Detektorelemente die Streustrahlung aus mehr als einem Teilabschnitt erfassen (bei der 3 : 1 Abbildung aus drei Teilabschnitten, bei der 4 : 1 Abbildung aus vier Teilabschnitten, usw.), dann wird die Auswertung komplizierter, weil jedes Detektorelement von mehr Teilabschnitten getroffen wird, die darüberhinaus enger beieinander liegen.

Die vorstehend beschriebenen Ausführungsformen können miteinander kombiniert sein. Dazu können verschiedene Sekundärblendenanordnungen vorhanden sein, von denen jeweils eine in den Strahlengang gebracht wird.

Es kann aber auch - wie in der EP-OS 462 688 im einzelnen erläutert - eine Blendenplatte mit einer Anzahl von Schlitzen vorgesehen sein, von denen jeweils ein Teil freigelassen und der Rest abgedeckt wird, und die in achsialer Richtung verschiebbar ist.

Die Ausführungsformen in den Figuren 1, 3 und 4 stellen insofern ein Optimum dar, als die Sekundärblendenanordnung mit den Abbildungsschlitzen durch eine ebene Blendenplatte gebildet werden kann. Jedoch sind diese Anordnungen insofern ungünstig, als einerseits der (mittlere) Durchmesser des Primärstrahlenbündel 28 im Untersuchungsbereich relativ klein und andererseits der Abstand zwischen dem Röntgenstrahler und der Detektorebene relativ groß ist. Dieser große Abstand setzt Räume mit relativ großer Deckenhöhe voraus - falls man bei vertikalem Strahlengang untersucht. Der relativ kleine Durchmesser des Primärstrahlenkegels im Untersuchungsbereich hat zur Folge, daß ein Gepäckstück häufiger gescannt werden muß - mit einer zweidimensionalen Relativverschiebung zwischen Gepäckstück und Strahlengang - um eine vollständige Untersuchung des Gepäckstücks zu gewährleisten. Dadurch verlängern sich die Untersuchungszeiten.

In Fig. 5 ist eine Ausführungsform beschrieben, die in dieser Hinsicht ein Optimum ist, d.h., bei ihr ist der Abstand zischen dem Röntgenstrahler und der Detektorebene kleiner, während gleichzeitig der Durchmesser des Primärstrahlenkegels im Untersuchungsbereich größer ist.

Die Darstellung der Fig. 5 ist so gewählt, daß links von der Systemachse die Untersuchungsanordnung (in verkleinertem Maßstab in Längsrichtung der Systemachse 24) dargestellt ist, während rechts von der Systemachse 24 einige Teile weggelassen wurden und stattdessen Hilfslinien der Anordnung eingetragen wurden. Da die Untersuchungsanordnung jedoch rotationssymmetrisch bezüglich der Systemachse 24 ausgebildet ist, ist für den Fachmann der tatsächliche Aufbau ohne weiteres erkennbar.

Die in Fig. 5 dargestellte Anordnung entspricht denjenigen nach Fig. 1, 3 und 4 weitgehend, weshalb vielfach dieselben Bezugzeichen verwendet wurden wie dort. Jedoch ist diese Ausführungsform anders dimensioniert, was für einzelne Komponenten dieser Ausführungsform Änderungen mit sich bringt.

Ins Auge springt, daß der Untersuchungsbereich, d.h. die Platten 21 und 26, wesentlich weiter vom Strahler 20 entfernt sind als bei den Figuren 1, 3 und 4. Die Platte 21 hat vom Strahler 20 einen Abstand von 1187 mm, während der Abstand der Blendenplatte 26 vom Strahler 500 mm größer ist.

Bei einem derart großen Abstand des Untersuchungsbereichs vom Strahler kann das Primärstrahlenbündel 28, das den Untersuchungsbereich durchsetzt, nicht ohne weiteres den gleichen Öffnungswinkel haben wie bei den Ausführungsformen nach Fig. 1, 3 und 4. Dies würde nämlich erfordern, daß entweder der Abstand der Detektoranordnung vom Strahler 20 noch weiter vergrößert wird (was unerwünscht ist) oder daß der Außendurchmesser der Detektoranordnung noch weiter vergrößert ist (geeignete Germaniumdetektoren sind derzeit aber nur bis zu einem Außendurchmesser von ca. 70 mm lieferbar) oder daß der mittlere Streuwinkel, unter dem die Detektoranordnung Streustrahlung aus dem Untersuchungsbereich empfängt, vergrößert wird. Letzteres würde bei unverändertem Impulsübertragsspektrum die Erfassung von Röntgenquanten mit geringerer Energie erfordern, die jedoch durch ein Gepäckstück im Untersuchungsbereich größtenteils absorbiert würden.

Der (halbe) Öffnungswinkel des Primärstrahlenbündels beträgt daher im Bogenmaß nur 0,0309 rad. Gleichwohl sind wegen des größeren Abstandes des Untersuchungsbereichs vom Strahler die Abmessungen des Primärstrahlenkegels im Untersuchungsbereich größer als bei den anderen Ausführungsformen.

Es läßt sich zeigen, daß man mit einer Detektoranordnung mit einem Außendurchmesser von 70 mm bei einem Abstand der Detektorebene vom Strahler von 2500 mm die Energie aus dem Untersuchungsbereich unter einem mittleren Streuwinkel von 0,052 rad (ca. 3°) empfangen kann. Dann beträgt der Abstand zwischen der Begrenzungsplatte 26 und der Detektorebene nur noch ca. 813 mm (bei den Ausführungsformen nach den Figuren 1, 3 und 4 beträgt dieser Abstand 1550 mm). Bei diesem vergleichsweise geringen Abstand zwischen Untersuchungsbereich und Detektorebene machen sich einige Effekte störend bemerkbar, die bei den Ausführungsformen nach den Figuren 1, 3 und 4 noch toleriert werden können.

Einer der durch den geringen Abstand zwischen Detektorebene und Untersuchungsbereich hervorgerufenen störenden Effekte besteht darin, daß der Winkel zwischen den Strahlen 30 und 31 (Fig. 1), die den inneren Rand des Untersuchungsbereichs mit dem äußeren Rand der Detektoranordnung bzw. den äußeren Rand des Untersuchungsbereichs mit dem inneren Rand der Detektoranordnung verbinden, immer größer wird. Man kann diesen Streuwinkelunterschied zwar gemäß den Figuren 1, 3 oder 4 dadurch reduzieren, daß man in der Blendenplatte 27 noch mehr Abbildungsschlitze vorsieht, doch läßt sich diese Zahl der Schlitze nicht beliebig steigern, weil es dann immer schwieriger wird, Detektorelemente vor Streustrahlung aus den ihnen nicht zugeordneten Teilen des Untersuchungsbereichs abzuschirmen.

Bei Fig. 5 wird daher insofern ein anderer Weg beschritten, als die Abbildungsschlitze nicht mehr in einer Ebene angeordnet werden, sondern so, daß sich ein konstanter Abbildungsmaßstab ergibt (der Abbildungsmaßstab ist das Verhältnis der Wegstrecken, die ein gestreutes Röntgenquant vorund hinter dem Abbildungsschlitz zurücklegt). Ein konstanter Abbildungsmaßstab ergibt sich dann, wenn die Abbildungsschlitze auf den Mantelflächen eines zur Systemachse 24 konzentrischen Kegelstumpfes liegen, der die Detektorebene in dem gleichen Kreis schneidet, in den das Primärstrahlenbündel 28 die Detektorebene schneiden würde. Die Kegelstumpfmantelfläche ist in Fig. 5 in der rechten Hälfte durch eine punktierte Gerade definiert, die die Punkte G und C miteinander verbindet. Der Punkt G liegt auf der Schnittlinie des Primärstrahlenbündels 28 mit der Detektorebene, während der Punkt C durch die Randstrahlen 30 und 31 definiert wird (vergl. Fig. 1).

Wenn die Abbildungsschlitze auf diesem Kegelstumpfmantel liegen, ist die Unterteilung der Detektoranordnung beliebig: sie wird auf dem Primärstrahlenbündel reproduziert. Vorzugsweise wird eine Unterteilung benutzt, bei der alle Detektorelemente dieselbe Breite haben. Bei dieser Unterteilung würden näherungsweise alle Detektorelemente gleich große Signale liefern, wenn der Untersuchungsbereich mit einem homogenen Körper gefüllt wäre.

Bei konstanter Detektorbreite genügt der mittlere Radius r eines Detektorelements der Beziehung:

$$r = R_1 + (n - 0,5) \bullet B/n_1$$

Dabei ist $R_1$ der Innenradius des innersten Detektorelements und B die Breite der Detektoranordnung (Differenz zwischen Außenradius des äußersten Detektorelements und Innenradius des innersten Detektorelements). n ist wiederum die von innen nach außen gezählte Nummer des Detektorelements und $n_1$ die Zahl der Detektorelemente. Im Ausführungsbeispiel ist $R_1$ = 9 mm, B = 26 mm und $n_1$ = 12.

Wegen des geringen Abstandes zwischen dem Untersuchungsbereich und der Detektorebene empfielt es sich, vier Abbildungsschlitze auf dem erwähnten Kegelmantelstumpf vorzusehen, von denen der innerste den Detektorelementen 1 bis 3, der nächste den Detektorelementen 4 bis 6, der übernächste den Detektorelementen 7 bis 9 und der äußerste den Detektorelementen 10 bis 12 zugeordnet ist. Jede dieser vier Gruppen von Detektorelementen sieht einen Teil des Untersuchungsbereichs, dessen Tiefe (Abmessung in Richtung der Systemachse 24) einem Viertel der Tiefe des Untersuchungsbereichs entspricht.

Die Lage der Schlitze auf dem Kegelstumpfmantel erhält man, wenn man von der Mitte des mittleren Detektorelements einer jeden Gruppe, d.h. von der Mitte der Detektorelemente 2, 5, 8 und 11 Geraden zieht, die - in einer Ebene mit der Systemachse 24 - das Primärstrahlenbündel 28 unter dem mittleren Streuwinkel von 0,052 rad schneiden. Der Schnittpunkt dieser Geraden mit der punktierten Geraden definiert die Lage und den Radius der vier Abbildungsschlitze.

Um in der Praxis die vier Abbildungsschlitze zu realisieren, müßten entweder vier ebene Blendenplatten an entsprechenden Positionen mit entsprechenden, zur Systemachse 24 konzentrischen Abbildungsschlitzen vorgesehen sein, oder ein einziger komplexer geformter rotationssymmetrischer Blendenkörper mit vier Abbildungsschlitzen. Beides ist relativ aufwendig.

Fig. 5b zeigt eine einfachere Lösung mit nur zwei ebenen Blendenplatten A1 und A2. Die Blendenplatte A1 liegt in der Mitte zwischen den beiden Ebenen, in denen die beiden inneren Abbildungsschlitze im Idealfall liegen müßten und die Blendenplatte A2 liegt in der Mitte zwischen den beiden Ebenen, in denen die beiden äußeren Schlitze liegen müßten, wenn der Abbildungsmaßstab für alle Abbildungsschlitze identisch sein sollte. Die Radien der Schlitze in diesen beiden Ebenen sind so gewählt, daß die oben erwähnten Geraden von der Mitte der Detektorelemente 2, 5, 8 und 11 durch diese Abbildungsschlitze hindurchlaufen. Die Blendenplatte A1 hat von der Strahlenquelle 20 einen Abstand von 1915 mm, während die Blendenplatte A2 von dem Strahler 2039 mm entfernt ist. Die Radien der beiden Abbildungsschlitze S1 und S2 in der Blendenplatte A1 betragen 24,74 bzw. 31,26 mm, während die Radien der Abbildungsschlitze S3 und S4 in der Blendenplatte A2 35,17 bzw. 41,70 mm betragen.

Durch den Schlitz S1 hindurch sollen Detektorelemente 1 bis 3 den innersten (obersten) Teil des Untersuchungsbereichs (A ..... C) erfassen, während der darauf folgende Teil des Untersuchungsbereichs (D ..... F) durch den Abbildungsschlitz S2 auf die Detektorelemente 4 bis 7 abgebildet wird. Die Detektorelemente 10 .... 12 "sehen" durch den Abbildungsschlitz S4 hindurch den am weitesten außen (unten) liegenden Teil ( J..... L)des Untersuchungsbereichs, während der daran anschließende (G ..... I) Teil durch den Schlitz S3 hindurch auf die Detektorelemente 7 bis 9 abgebildet wird.

Um zu verhindern, daß Streustrahlung aus einem benachbarten Teil des Untersuchungsbereichs durch einen benachbarten Schlitz auf eine Gruppe von Detektorelementen trifft, müssen wie bei den Ausführungsformen nach Fig. 3 und 4 Selektionsschlitze vorgesehen sein, so daß jede Gruppe von Detektorelementen nur durch den ihr zugeordneten Abbildungsschlitz hindurch Streustrahlung aus dem Untersuchungsbereich empfangen kann. Diese Selektionsschlitze werden in der jeweils anderen Blendenplatte angebracht. So ist beispielsweise der Selektionsschlitz, der sicherstellen soll, daß die Detektorelemente 1 bis 3 nur durch den Selektionsschlitz S1 in der Blendenplatte A1 hindurch Streustrahlung empfangen, in der Blendenplatte A2 angeordnet. Ebenso befindet sich der Selektionsschlitz S21 für die Detektorelemente 4 bis 6 in der Blendenplatte A2, hingegen befinden sich die Selektionsschlitze S31 und S41, die sicherstellen sollen, daß die Detektorelemente 7 bis 9 bzw. 10 bis 12 nur durch den Schlitz S3 bzw. S4 in der Blendenplatte A2 Streustrahlung empfangen, in der Blendenplatte A1.

Die Selektionsschlitze S11 .... S41 haben Radien von 22,05 mm, 28,6 mm, 37,9 bzw. 44,45 mm. Ihre Breite nimmt von innen nach außen von 1,9 mm auf 2,5 mm zu.

Die Selektionsschlitze S11 .... S41 reichen noch nicht aus, um die Detektorelemente 1, 2, 3 .... 10, 11, 12 gegen Streustrahlung aus ihnen nicht zugeordneten Teilen des Untersuchungsbereichs abzuschirmen. Deshalb ist eine weitere Blendenplatte S im Abstand von 2300 mm vom Strahler 20 mit weiteren Selektionsschlitzen S12 .... S42 vorgesehen. Die Mittellinien dieser Selektionsschlitze haben einen Radius von 16,4 mm bzw. 23,0 bzw. 29,5 bzw. 36 mm. Die Breite dieser Schlitze nimmt von innen nach außen von 4,2 mm auf 3,6 mm ab.

Wie schon in Verbindung mit Fig. 1 und 2 erläutert, sollen gestreute Röntgenquanten, die die Ebene, welche der sie erzeugende Primärstrahl und die Systemachse definieren, unter einem relativ großen Winkel schneiden, von der Detektoranordnung nicht registriert werden, weil dann der von den einzelnen Detektorelementen erfaßte Streuwinkelbereich vergrößert würde. Deshalb muß auch bei der Ausführungsform nach Fig. 5 in dem Bereich zwischen der Begrenzungsplatte 26 und der Detektorebene - am besten in jedem der durch die Blendenplatten A1, A2 und S definierten vier Abschnitte - ein Kollimator mit Lamellen vorgesehen sein, die in Ebenen liegen, welche die Systemachse 24 enthalten.

Wenn alle Lamellen in dem Kollimator gemäß Fig. 2 gleich lang und gleich breit wären, dann würden die weiter auswärtsliegenden Detektorelemente Streustrahlung aus einem größeren Streuwinkelbereich empfangen können als die inneren Detektorelemente.

In den Teilen des Untersuchungsbereichs, die den äußeren Detektorelementen zugeordnet sind, könnte daher der Impulsübertrag nicht mit der gleichen Genauigkeit bestimmt werden wie für die anderen Teile. Um dieses zu vermeiden, haben die Lamellen bei dem in Fig. 2 dargestellten Kollimator unterschiedliche Breiten. Sie sind so angeordnet, daß der Zwischenraum zwischen den Lamellen sich als Funktion des Abstandes von der Systemachse möglichst wenig ändert.

Betrachtet man jedoch diesen Zwischenraum bzw. die jeweils mögliche Änderung des Streuwinkels als Funktion des Abstandes von der Systemachse, dann ergeben sich Diskontinuitäten bei den Abständen, bei denen neue Lamellen hinzukommen. Diese Diskontinuitäten sind umso störender, je kürzer der Kollimator ist.

Diese Diskontinuitäten lassen sich vermeiden, wenn die Abmessungen der Lamellen in Richtung parallel zur Systemachse von innen nach außen zunehmen. Eine derartige Lamelle ist in Fig. 6 dargestellt. Dabei ist die rechte Seite der Lamelle 36 innerhalb des Kollimators a) der Systemachse benachbart. Die obere rechte Ecke ist abgeschrägt.

Fig. 6b zeigt eine andere Form der Lamelle 36, wobei die obere und die untere Ecke abgeschrägt sind. Gemeinsam ist allen möglichen Formen dieser Lamelle, daß ihre Abmessungen parallel zur Systemachse als Funktion des Abstands von der Systemachse gleich sind. Es ist auch möglich, die beiden Lösungen (unterschiedliche Breite der Lamellen gem. Fig. 2 und von innen außen zunehmende Lamellenabmessungen gem. Fig. 6a....6b) miteinander zu kombinieren. In diesem Fall sollten die Lamellen 33 und 34 analog zu der Lamelle 36 geformt sein.

Bei den vorstehend erläuterten Ausführungsbeispielen ist eine Rotationssymmetrie gegeben. Grundsätzlich ist jedoch eine Rotationssymmetrie nicht erforderlich. Es kann beispielsweise auch mit einem Primärstrahlenbündel mit halbkreisförmigem Querschnitt gearbeitet werden, wenn der bzw. die Schlitze in der Blendenanordnung und die Detektorelemente ebenfalls Halbkreisform haben. Ebenso ist es nicht erforderlich, daß der Querschnitt des Primärstrahlenbündels, die Schlitze und die Detektorelemente Kreisform haben. Allgemein gilt, daß das Primärstrahlenbündel sich im Untersuchungsbereich auf der Mantelfläche eines Kegels (oder auf einem Sektor einer solchen Mantelfläche) ausbreiten muß. Das Primärstrahlenbündel kann ein ebener Fächer sein, wie in der EP-OS 462 658, Fig. 9 und 10, näher dargestellt. Zu einem derartigen Fächer entartet ein Sektor auf der Mantelfläche eines Kegels, dessen halber Öffnungswinkel gerade 90° beträgt. Die Systemachse verläuft in diesem Fall senkrecht zu dem Strahlenfächer zu dem Fokus des Röntgenstrahlers. - Auf der anderen Seite entartet das Primärstrahlenbündel im Untersuchungsbereich zu einem Nadelstrahl, wenn der Öffnung des Kegels 0° beträgt. Die Erfindung ist auch in diesen Fällen anwendbar. Der Begriff "Kegel" muß daher in diesem Sinne weit interpretiert werden.

## Patentansprüche

1. Anordnung zum Messen des Impulsübertragsspektrums von elastisch gestreuten Röntgenquanten mit

   - einem polychromatischen Röntgenstrahler (20),
   - einer zwischen dem Röntgenstrahler und dem Untersuchungs bereich angeordneten Primärblendenanordnung (21) zum Ausblenden eines den Untersuchungsbereich auf der Mantelfläche eines Kegels durchsetzenden Primärstrahlenbündels (28)
   - einer aus mehreren Detektorelementen (1..) bestehenden Detektoranordnung zum Erfassen von im Untersuchungsbereich gestreuten Röntgenquanten und
   - einer zwischen dem Untersuchungsbereich und der Detektoranordnung (D) angeordneten Sekundärblendenanordnung mit mindestens einer Blendenplatte, die mit Abbildungsschlitzen versehen ist, die eine durch den Röntgenstrahler (20) verlaufende Systemachse kreisbogenförmig umschließen,

   dadurch gekennzeichnet, daß die Anordnung so ausgebildet und die Abbildungsschlitze (S1....S5) in der Sekundärblendenanordnung so angeordnet sind, daß durch jeden Abbildungsschlitz die Streustrahlung jeweils nur aus einem Teil des Primärstrahlenbündels im Untersuchungsbereich zur Detektoranordnung gelangen kann, wobei die Streustrahlung aus einem näher bei dem Röntgenstrahler befindlichen Teil (A..F) des Primärstrahlenbündels im Untersuchungsbereich von in geringerem Abstand von der Systemachse befindlichen Detektorelementen (1..6) erfaßt wird als Streustrahlung aus einem weiter vom Röntgenstrahler entfernten Teil (G..L) des Primärstrahlenbündels im Untersuchungsbereich und daß die Teile des Primärstrahlenbündels im Untersuchungsbereich, deren Streustrahlung durch die Abbildungsschlitze hindurch von der Detektoranordnung erfaßt werden, sich nicht oder nur geringfügig überlappen.

2. Anordnung nach Anspruch 1, dadurch gekennzeichnet, daß die Sekundärblendenanordnung mit nur zwei Abbildungsschlitzen (S1, S2) in unterschiedlichen Abständen von der Systemachse (24) versehen ist und daß durch den Abbildungsschlitz (S1) mit dem geringeren Abstand von der Systemachse (24) der näher am Röntgenstrahler (20) befindliche Teil (A....F) des Untersuchungsbereichs auf die näher an der Systemachse befindlichen Detektorelemente (1....6) abgebildet wird und daß der restliche Teil (G....L) des Untersuchungsbereichs durch den anderen Abbildungsschlitz auf die übrigen Detektorelemente (7....12) abgebildet wird.

3. Anordnung nach Anspruch 1 dadurch gekennzeichnet, daß die Sekundärblendenanordnung mit n Abbildungsschlitzen (S1....S4) versehen ist, wobei n eine ganze Zahl größer als 2 ist und daß durch die Abbildungsschlitze Gruppen von Detektorelementen von Streustrahlung aus aneinander angrenzenden Teilen des Untersuchungsbereichs getroffen werden, wobei die Detektorelemente einer Gruppe (z.B. 1....4) und der ihnen durch einen Abbildungsschlitz (S3) zugeordnete Teil (A....D) des Untersuchungsbereichs einen umso größeren Abstand von der Systemachse (24) aufweisen, je größer der Krümmungsradius des zugeordneten Abbildungsschlitzes ist.

4. Anordnung nach einem der vorhergehenden Ansprüche dadurch gekennzeichnet, daß alle Abbildungsschlitze sich in einer einzigen ebenen Blendenplatte befinden.

5. Anordnung nach einem der Ansprüche 1 bis 3, dadurch gekennzeichnet, daß die Abbildungsschlitze in wenigstens zwei unterschiedlichen Ebenen liegen, und daß die Abbildungsschlitze mit dem geringeren Radius dichter beim Untersuchungsbereich liegen.

6. Anordnung nach einem der vorhergehenden Ansprüche, dadurch gekennzeichnet, daß zu Abschirmungszwecken zwischen dem Untersuchungsbereich und der Detektoranordnung Selektionsschlitze (271, 272) vorgesehen sind, die eine solche Position und solche Abmessungen haben, daß die Detektorelemente nur von Streustrahlung aus dem ihnen zugeordneten Teil des Untersuchungsbereiches getrof-

7. Anordnung nach einem der vorherigen Ansprüche, dadurch gekennzeichnet, daß die Sekundärblendenanordnung wenigstens zwei ebene Blendenplatten (A1, A2) umfaßt, die neben Abbildungsschlitzen (S1...S4) Selektionsschlitze (S11....S41) aufweisen, so daß die von den einzelnen Detektorelementen (z.B. 2) erfaßte Streustrahlung einen Abbildungsschlitz (S1) und mindestens einen Selektionsschlitz (S11) durchsetzt.

8. Anordnung nach einem der vorhergehenden Ansprüche, dadurch gekennzeichnet, daß zwischen dem Untersuchungsbereich und der Detektoranordnung (D) eine Kollimatoranordnung mit Lamellen zur Absorption von Röntgenstrahlung vorgesehen ist und daß die Lamellen (33, 34....36) in Ebenen liegen, die die Systemachse (24) enthalten.

9. Anordnung nach Anspruch 8, dadurch gekennzeichnet, daß die Lamellen (33, 34, 36) in Richtung senkrecht zur Systemachse unterschiedliche Abmessungen haben, so daß der Zwischenraum zwischen den Lamellen sich als Funktions des Abstands von der Systemachse möglichst wenig ändert.

10. Anordnung nach einem der vorhergehenden Ansprüche, dadurch gekennzeichnet, daß die Lamellen (36) auf ihrer der Systemachse (24) zugewandten Seite kürzer sind als auf der davon abgewandten Seite.

11. Anordnung nach einem der vorhergehenden Ansprüche, dadurch gekennzeichnet, daß der Untersuchungsbereich die Mitte zwischen dem Röntgenstrahler (20) und der Detektoranordnung (D) umschließt und daß vorzugsweise die Mitte dichter an der detektorseitigen Grenze (26) als an der strahlerseitigen Grenze (21) des Untersuchungsbereichs liegt.

12. Anordnung nach Anspruch 1, dadurch gekennzeichnet, daß die Sekundärblendenanordnung sich in einer solchen Position zwischen Detektoranordnung und Untersuchungsbereich befindet, daß die Detektoranordnung (D) Streustrahlung nur aus einem Teil (G..L) des Untersuchungsbereichs erfassen kann, und daß Abschirmmittel (272) vorgesehen sind, die die Detektorelemente gegen Streustrahlung aus dem restlichen Teil (A......F) des Untersuchungsbereichs abschirmen.

## Claims

1. A device for measuring the pulse transfer spectrum of elastically scattered X-ray quanta, comprising

   - a polychromatic X-ray source (20),
   - a primary diaphragm device (21) which is arranged between the X-ray source and the examination zone and serves to form a primary beam (28) irradiating the examination zone as a surface of cone,
   - a detector device which consists of a plurality of detector elements (1 ..) for detecting X-ray quanta scattered in the examination zone, and
   - a secondary diaphragm device which is arranged between the examination zone and the detector device (D) and comprises at least one diaphragm plate provided with imaging slits which enclose, as an arc of circle, a system axis extending through the X-ray source (20),

   characterized in that the device is constructed and the imaging slits (S1 ... S5) in the secondary diaphragm device are arranged in such a manner that via each imaging slit the scattered radiation from each time only a respective part of the primary radiation beam in the examination zone can reach the detector device, the scattered radiation from a part (A ... F) of the primary radiation beam in the examination zone which is situated nearer to the X-ray source being detected by detector elements (1 ... 6) situated at a smaller distance from the system axis than detector elements detecting scattered radiation from a part (G ... L) of the primary radiation beam in the examination zone which is situated further from the X-ray source, no or hardly any overlapping occurring of the parts of the primary radiation beam in the examination zone whose scattered radiation is detected by the detector device via the imaging slits.

2. A device as claimed in Claim 1, characterized in that the secondary diaphragm device comprises only two imaging slits (S1, S2) at different distances from the system axis (24), and that via the imaging slit (S1) which is situated at the smaller distance from the system axis (24) the part (A ... F) of the examination zone which is situated nearer to the X-ray source (20) is imaged on the detector elements (1 ... 6) which are situated nearer to the system axis, the remaining part (G ... L) of the examination zone being imaged on the remaining detector elements (7 ... 12) via the other imaging slit.

3. A device as claimed in Claim 1, characterized in that the secondary diaphragm device comprises n imaging slits (S1 ... S4), n being an integer greater than 2, and that scattered radiation from adjoining parts of the examination zone is incident, *via* the imaging slits, on groups of detector elements, the detector elements of a group (for example, 1 ... 4) and the part (A ... D) of the examination zone associated therewith by an imaging slit (S3) being situated at a distance from the system axis (24) which is greater as the radius of curvature of the associated imaging slit is greater.

4. A device as claimed in one of the preceding Claims, characterized in that all imaging slits are provided in a single, flat diaphragm plate.

5. A device as claimed in one of the Claims 1 to 3, characterized in that the imaging slits are situated in at least two different planes, the imaging slits of smaller radius being situated nearer to the examination zone.

6. A device as claimed in one of the preceding Claims, characterized in that for the purpose of shielding selection slits (271, 272) are provided between the examination zone and the detector device, the position and dimensions of said selection slits being such that the detector elements are struck only by scattered radiation from their associated part of the examination zone.

7. A device as claimed in one of the preceding Claims, characterized in that the secondary diaphragm device comprises at least two flat diaphragm plates (A1, A2) which comprise selection slits (S11 ... S41), in addition to imaging slits (S1 ... S4), so that the scattered radiation detected by the individual detector elements (for example, 2) traverses an imaging slit (S1) and at least one selection slit (S11).

8. A device as claimed in one of the preceding Claims, characterized in that between the examination zone and the detector device (D) there is provided a collimator device which comprises laminations for absorbing X-rays, the laminations (33, 34 ... 36) being situated in planes containing the system axis (24).

9. A device as claimed in Claim 8, characterized in that the laminations (33, 34, 36) have different dimensions in the direction perpendicular to the system axis so that the clearance between the laminations varies as little as possible as a function of the distance from the system axis.

10. A device as claimed in one of the preceding Claims, characterized in that at their side facing the system axis (24) the laminations (36) are shorter than at their side which is remote therefrom.

11. A device as claimed in one of the preceding Claims, characterized in that the examination zone contains the centre between the X-ray source (20) and the detector device (D), the centre preferably being situated nearer to the boundary (26) of the examination zone at the detector side than to the boundary (21) of the examination zone at the source side.

12. A device as claimed in Claim 1, characterized in that the secondary diaphragm device is provided in such a position between the detector device and the examination zone that the detector device (D) can detect only scattered radiation from a part (G ... L) of the examination zone, there being provided shielding means (272) which shield the detector elements from scattered radiation from the remaining part (A ... F) of the examination zone.

**Revendications**

1. Dispositif de mesure du spectre de transfert d'impulsions de quanta de rayons X diffusés élastiquement avec :

 - un générateur de rayons X polychromatique (20),
 - un dispositif d'écran primaire (21) disposé entre le générateur de rayons X et la zone d'examen en vue de la suppression d'un faisceau de rayons primaires (28) traversant la zone d'examen sur la surface périphérique d'un cône,
 - un dispositif détecteur composé de plusieurs éléments détecteurs (1...) en vue de saisir des quanta de rayons X diffusés dans la zone d'examen, et
 - un dispositif d'écran secondaire avec au moins une plaque d'écran, disposé entre la zone d'examen et le dispositif détecteur (D) et doté de fentes de représentation qui renferment, en arc de cercle, un axe de système s'étendant au travers du générateur de rayons X (20),

 caractérisé en ce que le dispositif est conçu et les fentes de représentation ($S_1...S_5$) dans le dispositif d'écran secondaire sont disposées de telle sorte que, par chaque fente de représentation, le rayonnement diffusé ne puisse respectivement parvenir que d'une partie du faisceau de rayons primaires dans la zone d'examen vers le dispositif détecteur, le rayonnement diffusé à partir d'une partie (A...F) du faisceau de rayons primaires dans la zone d'examen se trouvant plus près du générateur de rayons X est saisi par des éléments détecteurs (1...6) se trouvant à une distance inférieure de l'axe du système comme rayonnement diffusé à partir d'une partie (G...L) du faisceau de rayons primaires dans la zone d'examen plus éloignée du générateur de rayons X et que les parties du faisceau de rayons primaires dans la zone d'examen dont le rayonnement diffusé est saisi par les fentes de représentation depuis le dispositif détecteur ne se chevauchent pas ou seulement légèrement.

2. Dispositif selon la revendication 1, caractérisé en ce que le dispositif d'écran secondaire est muni de seulement deux fentes de représentation ($S_1$, $S_2$) à différents intervalles de l'axe du système (24) et que la partie (A...F) de la zone d'examen se trouvant plus près du générateur de rayons X (20) est représentée par la fente de représentation ($S_1$) présentant une distance inférieure de l'axe du système (24) sur les éléments détecteurs (1...6) se trouvant plus près de l'axe du système et que la partie résiduelle (G...L) de la zone d'examen est représentée par l'autre fente de représentation sur les autres éléments détecteurs (7...12).

3. Dispositif selon la revendication 1, caractérisé en ce que le dispositif d'écran secondaire est doté de n fentes de représentation ($S_1$...$S_4$), n étant un nombre entier supérieur à 2 et en ce que des groupes d'éléments détecteurs sont touchés par le rayonnement diffusé provenant de parties adjacentes de la zone d'examen par les fentes de représentation, les éléments détecteurs d'un groupe (par exemple 1... 4) et la partie (A...D) de la zone d'examen qui leur est affectée par une fente de représentation ($S_3$) présentant une distance par rapport à l'axe du système (24) d'autant plus grande que le rayon de courbure de la fente de représentation qui lui est affectée est grand.

4. Dispositif selon l'une des revendications précédentes, caractérisé en ce que les fentes de représentation se trouvent dans une seule plaque d'écran plane.

5. Dispositif selon l'une des revendications 1 à 3, caractérisé en ce que les fentes de représentation se trouvent dans au moins deux plans différents et que les fentes de représentation avec le rayon inférieur sont plus proches de la zone d'examen.

6. Dispositif selon l'une des revendications précédentes, caractérisé en ce que des fentes de sélection (271, 272) sont prévues entre la zone d'examen et le dispositif détecteur à des fins de protection et présentent une position et des dimensions telles que les éléments détecteurs ne sont touchés que par le rayonnement diffusé provenant de la partie de la zone d'examen qui leur est respectivement affectée.

7. Dispositif selon l'une des revendications précédentes, caractérisé en ce que le dispositif d'écran secondaire comprend au moins deux plaques d'écran planes ($A_1$, $A_2$) qui présentent, outre les fentes de représentation ($S_1$...$S_4$), des fentes de sélection ($S_{11}$...$S_{41}$) si bien que le rayonnement diffusé saisi par les différents éléments détecteurs (par exemple, 2) traverse une fente de représentation ($S_1$) et au moins une fente de sélection ($S_{11}$).

8. Dispositif selon l'une des revendications précédentes, caractérisé en ce qu'un dispositif collimateur avec des lamelles en vue de l'absorption du rayonnement X est prévu entre la zone d'examen et le dispositif détecteur (D) et que les lamelles (33, 34... 36) sont disposées dans des plans qui contiennent l'axe du système (24).

9. Dispositif selon la revendication 8 caractérisé en ce que les lamelles (33, 34, 36) ont des dimensions différentes dans la direction perpendiculaire à l'axe du système si bien que l'intervalle entre les lamelles varie un minimum en fonction de la distance par rapport à l'axe du système.

10. Dispositif selon l'une des revendications précédentes, caractérisé en ce que les lamelles (36) sont plus courtes sur leur face tournée vers l'axe du système (24) que sur leur face opposée à celui-ci.

11. Dispositif selon l'une des revendications précédentes, caractérisé en ce que la zone d'examen renferme le centre entre le générateur de rayons X (20) et le dispositif détecteur (D) et que le milieu est de préférence plus proche de la limite côté détecteur (26) que de la limite côté générateur de rayons X (21) de la zone d'examen.

12. Dispositif selon la revendication 1, caractérisé en ce que le dispositif à écran secondaire se trouve dans une position telle entre le dispositif détecteur et la zone d'examen que le dispositif détecteur (D) peut enregistrer un rayonnement diffusé seulement à partir d'une partie (G...L) de la zone d'examen et que des moyens de protection (272) qui protègent les éléments détecteurs contre le rayonnement diffusé provenant de la partie résiduelle (A...F) de la zone d'examen sont prévus.

Fig.1

Fig.2

Fig.6a          Fig.6b

Fig.3

Fig.4

Fig.5